**Europäisches Patentamt**

**European Patent Office**

**Office européen des brevets**

(19)

(11) Veröffentlichungsnummer : **0 334 857 B1**

(12) **EUROPÄISCHE PATENTSCHRIFT**

(45) Veröffentlichungstag der Patentschrift :
**11.12.91 Patentblatt 91/50**

(51) Int. Cl.⁵ : **H02K 5/167, H02K 5/124,**
    **F02N 11/00**

(21) Anmeldenummer : **87907306.2**

(22) Anmeldetag : **12.11.87**

(86) Internationale Anmeldenummer :
**PCT/DE87/00511**

(87) Internationale Veröffentlichungsnummer :
**WO 88/04489 16.06.88 Gazette 88/13**

(54) **ELEKTRISCHER ANDREHMOTOR FÜR BRENNKRAFTMASCHINEN.**

(30) Priorität : **08.12.86 DE 3641874**

(43) Veröffentlichungstag der Anmeldung :
**04.10.89 Patentblatt 89/40**

(45) Bekanntmachung des Hinweises auf die
Patenterteilung :
**11.12.91 Patentblatt 91/50**

(84) Benannte Vertragsstaaten :
**DE FR GB IT**

(56) Entgegenhaltungen :
**GB-A- 2 152 294**
**GB-A- 2 157 766**
**US-A- 4 458 405**
**Patent Abstracts of Japan, vol. 8, No: 262**
**(M-341)(1699) 30 November 1984, & JP, A,**
**59134376**

(73) Patentinhaber : **ROBERT BOSCH GMBH**
**Postfach 50**
**W-7000 Stuttgart 1 (DE)**

(72) Erfinder : **SCHMIDT, Peter**
**Richard-Wagner-Str. 29**
**W-7141 Schwieberdingen (DE)**
Erfinder : **DROLL, Erich**
**Lärchenweg 75**
**W-7143 Vaihingen/Enz (DE)**
Erfinder : **ELSER, Erwin**
**Bergweg 24**
**W-7145 Markgröningen (DE)**

EP 0 334 857 B1

## Beschreibung

Stand der Technik

Die Erfindung geht von einem elektrischen Andrehmotor für Brennkraftmaschinen nach der Gattung des Hauptanspruchs aus. Es ist bereits bei einem derartigen Andrehmotor nach der DE-A 31 31 148 bekannt, Schmiermittel in die Abdeckkappe einzubringen und die Abdeckkappe verhältnismäßig eng über die Teile eines Ankerlängsspielausgleichs und eines Lagerfortsatzes des Kommutatorlagers zu stülpen und außen an der Stirnseite des Kommutatorlagers anzuschrauben. Bei dieser Anordnung ist von Nachteil, daß das Schmiermittel nicht ausreichend abgedichtet in der Abdeckkappe untergebracht ist. Das zum Schmieren der Lagerstelle der Antriebswelle in einem im Lagerfortsatz eingesetzten Gleitlager bestimmte Schmiermittel kann zu einem großen Teil zwischen Lagerfortsatz und Abdeckkappe entweichen. Dadurch ist der Schmiermittelbedarf unerwünscht hoch. Außerdem kommt es immer wieder zu unerwünschter Geräuschbildung durch Anlaufen einer U-förmig geöffneten Steckscheibe an der Abdeckkappe. Auch Lagerschäden können wegen Schmiermittelmangels auftreten.

Aus der US-A-4 458 405 ist noch ein Ventilatormotor bekannt, bei dem ein Dichtungsring zwischen einer Abdeckkappe und einer Lagerhülse angeordnet ist. Die Abdeckkappe ist jedoch in eine erweiterte Verlängerung der Lagerhülse gesteckt und hält dabei mit ihrer Außenseite den Dichtungsring gegen die Verlängerung gedrückt, wobei der Schmiermittelraum unnötig groß wird. Eine Ankerlängsspiel-Ausgleichsvorrichtung ist nicht vorgesehen, so daß das mit ihr verbundene Problem der unerwünschten Geräuschbildung nicht auftritt. Aufgabe, Lösung und Vorteile der Erfindung

Der Erfindung liegt die Aufgabe zugrunde, einen elektrischen Andrehmotor für Brennkraftmaschinen zu schaffen, bei dem eine wesentliche Dämpfung der Geräusche an der Lagerstelle der Antriebswelle erreicht und eine wirkungsvollere Schmierung der Lagerstelle mit wesentlich weniger Schmiermittel ermöglicht wird.

Zur Lösung der Aufgabe sind die im Kennzeichen des Hauptanspruchs angegebenen Maßnahmen vorgesehen.

Dabei ist von Vorteil, daß mit einfachen Mitteln, die in der Abdeckkappe eingesetzt sind und abdichtend an der Stirnseite des Lagerfortsatzes anliegen, der das Schmiermittel aufnehmende Raum nach außen abgedichtet ist. Schmiermittel gelangt nur noch zur Lagerstelle der Ankerwelle im Gleitlager und zu den Teilen des Ankerlängsspielausgleichs, so daß die Nachteile der bekannten Lösung vermieden werden.

Durch die in den Unteransprüchen aufgeführten Maßnahmen sind vorteilhafte Weiterbildungen des im Hauptanspruch angegebenen elektrischen Andrehmotors möglich, Besonders vorteilhaft ist es, eine Schmiermittelkappe als kostengünstig herzustellendes Kunststoffteil in die Abdeckkappe einzusetzen, welche das Schmiermittel aufnimmt und an der Stirnseite des Lagerfortsatzes anliegt. Die Schmiermittelkappe macht auch keine Verlängerung der Abdeckkappe erforderlich, denn der abgedichtete Schmiermittelraum kann wegen des geringeren Schmiermittelbedarfs kleiner gehalten werden als bisher. Andererseits hat es sich als besonders vorteilhaft ergeben, in der ohnehin als Tiefziehteil ausgebildeten Abdeckkappe eine Innenringschulter anzuformen, an der ein in die Abdeckkappe eingesetzter Dichtring anliegt, welcher auch an der Stirnseite des Lagerfortsatzes und an mindestens einem Teil des Ankerlängsspielausgleichs abdichtend anliegt.

Zeichnung

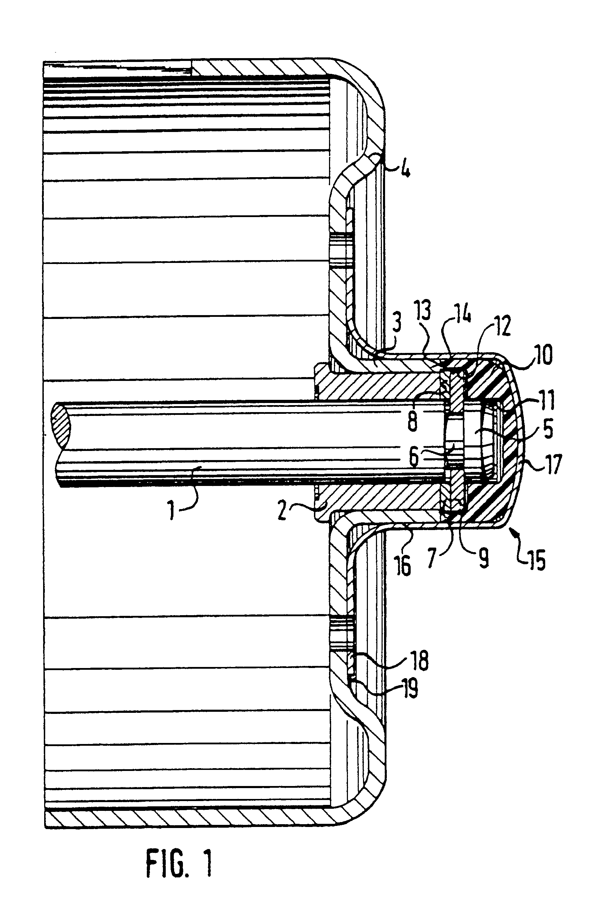

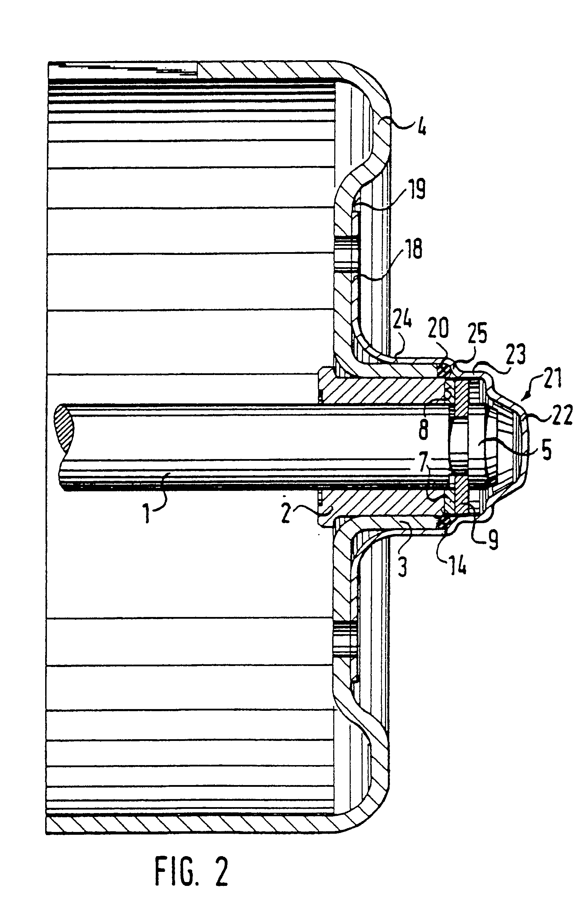

Ausführungsbeispiele der Erfindung sind in der Zeichnung dargestellt und in der nachfolgenden Beschreibung näher erläutert. Es zeigen Figur 1 ein erstes und Figur 2 ein zweites Ausführungsbeispiel des kommutatorseitigen Endes eines elektrischen Andrehmotors jeweils im Längsschnitt.

Beschreibung der Ausführungsbeispiele

Der Andrehmotor nach Figur 1 hat eine Antriebswelle 1, die in einem Gleitlager 2 drehbar gelagert ist. Das Gleitlager 2 ist in einem Lagerfortsatz 3 eines Kommutatorlagers 4 eingesetzt, welches das Motorgehäuse in an sich bekannter und nicht näher dargesteller Weise abschließt. Nahe ihrem aus dem Gleitlager 2 ragenden Ende 5 ist die Antriebswelle 1 mit einer Ringnut 6 versehen. Eine Ausgleichsscheibe 7 dient als Ankerlängsspielausgleich. Sie ist über die Ringnut 6 hinaus auf die Antriebswelle 1 geschoben und liegt an der Stirnseite 8 des Gleitlagers 2 an. Eine in die Ringnut 6 gesteckte, beispielsweise U-förmige Steckscheibe 9 liegt einerseits an der Ausgleichsscheibe 7 und andererseits an der dem Ende 5 der Antriebswelle 1 näher liegenden Seitenwand der Ringnut 6 an, so daß die Antriebswelle 1 in ihrer vorgesehenen axialen Lage im Andrehmotor drehbar gelagert ist.

Eine Schmiermittelkappe 10 ist beispielsweise als Kunststoffteil ausgebildet. Sie hat eine napfförmige Vertiefung 11, an die sich ein erweiterter Endabschnitt 12 anschließt. Der Durchmesser der Vertiefung 11 ist nur unwesentlich größer als der Durchmesser des Endes 5 der Antriebswelle 1. Der Durchmesser des erweiterten Endabschnitts 12 ist nur unwesentlich größer als der Durchmesser der Ausgleichsscheibe 7 und der Steckscheibe 9. Hiermit wird gleichzeitig eine metallische Berührung zwischen Steckscheibe 9 und Abdeckkappe 15 verhindert, wodurch keine Geräusche auftreten können. In die Vertiefung 11 ist Schmiermittel eingebracht. Die Schmiermittelkappe 10 ist über das Ende 5 und die Scheiben 7 und 9 gestülpt und liegt mit ihrer Stirnseite 13 an der Stirnseite 14 des Lagerfortsatzes 3 an. Eine als Tiefziehteil aus Blech hergestelle Abdeckkappe 15 ist mit ihrem topfförmigen Mittelteil 16 über die Schmiermittelkappe 10 auf den Lagerfortsatz 3 gesteckt. Der Boden 17 der Abdeckkappe 15 hält die Schmierttelkappe 10, 13 schmiermitteldicht an die Stirnseite 14 des Lagerfortsatzes 3 gedrückt, wozu ein Flansch 18 am offenen Ende der Abdeckkappe 15 in an sich bekannter und nicht näher dargestellter Weise an der äußeren Stirnseite 19 des Kommutatorlagers 4 lösbar befestigt ist.

Die Teile des in Figur 2 dargestellten zweiten Ausführungsbeispieles sind mit den selben Bezugszahlen bezeichnet, wenn sie gleich den Teilen nach Figur 1 sind.

Die Antriebswelle 1 ist wiederum im Gleitlager 2 drehbar gelagert, das in dem Lagerfortsatz 3 des Kommutatorlagers 4 eingesetzt ist. Die Ausgleichsscheibe 7 des Ankerlängsspielausgleichs ist an der Stirnseite 8 des Gleitlagers 2 anliegend von der Steckscheibe 9 gehalten. Das Gleitlager 2 ragt aus dem Lagerfortsatz 3 heraus und steht somit gegenüber dessen Stirnseite 14 vor und bildet eine Auflage für einen Dichtring 20. Der Dichtring 20 ist beispielsweise als O-Ring ausgebildet.

Eine Abdeckkappe 21 ist wiederum als Tiefziehteil aus Blech hergestellt. Sie hat einen napfförmigen Abschnitt 22, in dem Schmiermittel eingebracht ist. An den napfförmigen Abschnitt 22 schließt sich ein erweiterter zylindrischer Abschnitt 23 an, dessen Durchmesser nur unwesentlich größer als der der Scheiben 7 und 9 ist. An den Abschnitt 23 schließt sich ein weiterer zylindrischer Abschnitt 24 mit wiederum größerem Durchmesser an. Der Abschnitt 24 grenzt an den Flansch 18 der Abdeckkappe 21. Der zylindrische Abschnitt 24 hat einen Innendurchmesser, der dem Außendurchmesser des Lagerfortsatzes 3 des Kommutatorlagers 4 angepaßt ist. Der Übergang zwischen den Abschnitten 23 und 24 bildet eine Innenringschulter 25 zur axialen Anlage des Dichtringes 20.

Der Dichtring 20 kann zur Montage in die Abdeckkappe 21 an die Innenringschulter 25 eingelegt oder er kann auf das aus dem Lagerfortsatz 3 ragende Ende des Gleitlagers 2 geschoben sein. Die Abdeckkappe 21 ist über das Ende 5 der Antriebswelle 1 gestülpt. Der zylindrische Abschnitt 23 umgibt dann die Scheiben 7 und 9 und der zylindrische Abschnitt 24 umgibt den Dichtring 20 und den Lagerfortsatz 3. Wenn der Flansch 18 an der äußeren Stirnseite 19 des Kommutatorlagers 4 lösbar befestigt ist, drückt die Innenringschulter 25 den Dichtring 20 schmiermitteldicht sowohl an die Stirnseite 14 des Lagerfortsatzes 3 als auch an die Innenwand des zylindrischen Abschnitts 24 der Abdeckkappe 21.

Durch die Schmiermittelkappe 10 oder den Dichtring 20 läßt sich der in der lösbar befestigten Abdeckkappe 15 oder 21 vorgesehene Schmiermittelraum in einfacher und kostengünstiger Weise abdecken, ohne den Vorteil der lösbar am Kommutatorlager 4, 19 befestigten Abdeckkappe 15 oder 21 aufzugeben - Ankerlängsspielausgleich bei montierter Andrehvorrichtung. Die Schmiermittelkappe 10 oder der Dichtring 20 ermöglichen das geräuscharme und ausreichend geschmierte Drehen der Antriebswelle 1 im Gleitlager 2 und somit in der kommutatorseitigen Lagerstelle der Antriebswelle 1 bei wesentlich geringerem und dennoch ausreichendem Schmiermittelbedarf.

**Patentansprüche**

1. Elektrischer Andrehmotor für Brennkraftmaschinen, mit einer Antriebswelle (1), auf der ein Anker und ein Kommutator befestigt und auf der ein Einspurgetriebe und ein Andrehritzel bewegbar gelagert sind, und die in einem Antriebslager und in einem mit einer Abdeckkappe (15; 21) versehenen Kommutatorlager (4), welche Lager am Motorgehäuse befestigt sind, drehbar gelagert ist, und die Abdeckkappe (15; 21) einen ein Ende der Antriebswelle (1) samt Teilen (7, 9) eines Ankerlängsspielausgleichs aufnehmenden Schmiermittelraum umgreift, wobei die Abdeckkappe (15; 21) mit einem topfförmigen Mittelteil (16; 17) versehen ist und über einen rohrförmigen Lagerfortsatz (3) des Kommutatorlagers (4) gestülpt ist, dadurch gekennzeichnet, daß in der Abdeckkappe (15; 21) Mittel (10; 20) untergebracht und schmiermittelabdichtend zwischen der Stirnseite (14) des Lagerfortsatzes (3) des Kommutatorlagers (4) und der Abdeckkappe (15) gehalten sind und daß der Schmiermittelraum so geformt ist, daß er das Ende der Antriebswelle (1) und die Teile (7, 9) des Ankerlängsspielausgleichs mit geringem radialem Abstand umgibt.

2. Andrehmotor nach Anspruch 1, dadurch gekennzeichnet, daß die Mittel als Schmiermittelkappe (10) ausgebildet sind, die an die Stirnseite (14) des Lagerfortsatzes gedrückt ist.

3. Andrehmotor, nach Anspruch 1 oder 2, dadurch gekennzeichnet, daß das als Schmiermittelkappe (10) ausgebildete Mittel ein Formteil aus Kunststoff ist, das in die Abdeckkappe (15) eingesetzt ist.

4. Andrehmotor nach Anspruch 1, dadurch gekennzeichnet, daß die Mittel als Dichtring (20) ausgebildet sind, der an einer Innenringschulter (25) der Abdeckkappe (21) angeordnet ist und mindestens an der Stirnseite (74) des Lagerfortsatzes (3), und einem aus dem Lagerfortsatz (3) ragenden Lager (2) für die Antriebswelle (1) anliegt.

## Claims

1. Electric starter motor for internal combustion engines, having a drive shaft (1) on which an armature and a commutator are mounted and on which a shift gearbox and a starter pinion are movably mounted and which is rotatably mounted in a drive bearing and in a commutator bearing (4) which is provided with a cover (15; 21), which bearings are mounted on the engine housing, and the cover (15; 21) engages around a lubricant chamber which receives one end of the drive shaft (1) together with parts (7, 9) of an armature longitudinal play compensator, the cover (15; 21) being provided with a pot-shaped centre component (16; 17) and being turned over a tubular bearing extension (3) of the commutator bearing (4), characterised in that means (10; 20) are accommodated in the cover (15; 21) and are held in a lubricant-sealing manner between the end side (14) of the bearing extension (3) of the commutator bearing (4) and the cover (15), and in that the lubricant chamber is formed in such a way that it surrounds the end of the drive shaft (1) and the parts (7, 9) of the armature longitudinal play compensator at a small radial distance.

2. Starter motor according to Claim 1, characterised in that the means are constructed as a lubricant cap (10) which is pressed against the end side (14) of the bearing extension.

3. Starter motor according to Claim 1 or 2, characterised in that the means constructed as a lubricant cap (10) are a plastic moulded component which is inserted into the cover (15).

4. Starter motor according to Claim 1, characterised in that the means are constructed as a sealing ring (20) which is arranged on an inner ring shoulder (25) of the cover (21) and lies at least against the end side (14) of the bearing extension (3) and on a bearing (2), projecting out of the bearing extension (3), for the drive shaft (1).

## Revendications

1. Moteur électrique de démarrage de moteurs à combustion interne avec un arbre d'entraînement (1), sur lequel on fixe un induit et un commutateur, et sur lequel on loge un réducteur à un train et un pignon d'entraînement, et qui est logé en rotation dans un palier d'entraînement et dans un palier (4) de commutateur muni d'un couvercle (15, 21), ces paliers étant fixés sur le boîtier de moteur, et le couvercle (15, 21) entoure la chambre de graissage qui reçoit toutes les pièces (7, 9) d'un compensateur de jeu longitudinal du rotor à l'extrémité de l'arbre d'entraînement (1), le couvercle (15, 21) comprenant une pièce médiane (16, 17) en forme de pot et on l'insère sur un prolongement (3) tubulaire du palier de commutateur (4), moteur électrique caractérisé en ce que dans le couvercle (15, 21) on place des moyens (10, 20) faisant l'étanchéité vis-à-vis du lubrifiant et qu'on les maintient entre la face frontale (14) du prolongement de palier (3) du palier de commutateur (4) et le couvercle (15) et qu'on forme la chambre de graissage de telle sorte qu'elle entoure l'extrémité de l'arbre d'entraînement (1) et les pièces (7, 9) du compensateur de jeu de rotor avec un faible jeu radial.

2. Moteur de démarrage selon la revendication 1, caractérisé en ce qu'on forme les moyens comme couvercle de graissage (10) qu'on insère sur la face frontale (14) du prolongement de palier.

3. Moteur de démarrage selon la revendication 1 ou 2, caractérisé en ce qu'on utilise comme moyen en forme de couvercle de graissage (10) une pièce moulée en matière plastique, qu'on place dans le couvercle (15).

4. Moteur de démarrage selon la revendication 1, caractérisé en ce qu'on forme les moyens comme bague (20) d'étanchéité, qu'on place sur un épaulement (25) annulaire interne du couvercle (21) et qu'il repose au moins sur la face frontale (14) du prolongement de palier (3) et sur un palier (2) sortant du prolongement de palier (3) de l'arbre d'entraînement (1).

FIG. 1

FIG. 2